(19) Europäisches Patentamt
European Patent Office
Office européen des brevets

(11) **EP 4 597 864 A1**

(12) **EUROPEAN PATENT APPLICATION**
published in accordance with Art. 153(4) EPC

(43) Date of publication:
**06.08.2025 Bulletin 2025/32**

(21) Application number: **23870222.9**

(22) Date of filing: **06.09.2023**

(51) International Patent Classification (IPC):
**H04B 7/06** (2006.01)

(52) Cooperative Patent Classification (CPC):
**H04B 7/0456; H04B 7/06**

(86) International application number:
**PCT/CN2023/117247**

(87) International publication number:
**WO 2024/066983 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211217115**

(71) Applicant: **Datang Mobile Communications
Equipment Co., Ltd.
Beijing 100085 (CN)**

(72) Inventors:
• **LU, Yiwen
Beijing 100085 (CN)**
• **GAO, Qiubin
Beijing 100085 (CN)**

(74) Representative: **Studio Torta S.p.A.
Via Viotti, 9
10121 Torino (IT)**

(54) **CHANNEL STATE INFORMATION REPORTING METHOD, TERMINAL, AND NETWORK DEVICE**

(57) Embodiments of the present disclosure provide a channel state information reporting method, a terminal, and a network device. The method comprises: on the basis of channel measurement information corresponding to multiple channel measurement reference signal resources, and/or grouping information of the multiple channel measurement reference signal resources, determining one or more target codebook parameters; and reporting multiple pieces of codebook parameter information on the basis of the target codebook parameters.

Determining one or more target codebook parameters based on channel measurement information corresponding to multiple channel measurement reference signal resources and/or grouping information of multiple channel measurement reference signal resources — 100

Reporting multiple pieces of codebook parameter information based on the target codebook parameter — 101

FIG. 1

**Description**

CROSS-REFERENCES TO RELATED APPLICATIONS

The present application claims priority to Chinese patent application No. 202211217115.7 filed on September 30, 2022, entitled "Channel State Information Reporting Method, Terminal, and Network Device", which is hereby incorporated by reference in its entirety.

FIELD

The present application relates to the field of radio communications, and in particular, to methods for reporting channel state information, a terminal and a network device.

BACKGROUND

In the related art, a type II codebook design and precoding matrix index (PMI) parameter reporting are only applicable to a single-point transmission mode, and are not applicable to a multi-point coherent joint transmission (CJT) mode. In order to improve a transmission efficiency and balance a transmission quality within a system, a CJT transmission scheme having standardize addition of less than or equal to 4 multi transmission and reception points (multi-TRP/M-TRP) is currently supported. For a CJT transmission scheme, a terminal may perform joint channel measurement based on reference information sent by multiple transmission points, calculate joint codebook parameters, and report a channel state.

For the CJT transmission scheme, due to large differences in spatial domain information of different transmission points, a user equipment (UE) is currently supported to feed back spatial domain basis vector selection information calculated based on each transmission point. For reporting of a frequency domain basis vector, frequency domain basis vector selection information calculated based on each transmission point or joint frequency domain basis vector selection information calculated based on multiple transmission points is currently supported. In this case, how to configure and switch CJT codebook design information of the above two ways based on different CJT scenarios is an urgent problem to be solved.

BRIEF SUMMARY

Embodiments of the present application provide methods for reporting channel state information, a terminal and a network device, to solve a problem of how to configure and switch coherent joint transmission (CJT) codebook design information of two ways based on different CJT scenarios in the related art.

An embodiment of the present application provides a method for reporting channel state information, including:

determining one or more target codebook parameters based on channel measurement information corresponding to multiple channel measurement reference signal resources and/or grouping information of multiple channel measurement reference signal resources; and

reporting multiple pieces of codebook parameter information based on the target codebook parameter.

In some embodiments, the method further includes:
determining the grouping information of the multiple channel measurement reference signal resources based on a frequency domain basis vector selection result of the multiple channel measurement reference signal resources.

In some embodiments, reporting the multiple pieces of codebook parameter information includes:

reporting a target codebook parameter selection result through a first field while reporting the multiple pieces of codebook parameter information, where the first field is included in a channel state information part one (CSI part I) reporting field,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on the multiple channel measurement reference signal resources.

In some embodiments, reporting the multiple pieces of codebook parameter information includes:

reporting a frequency domain basis vector selection result through a second field while reporting the multiple pieces of codebook parameter information, where the second field is included in a channel state information part two (CSI part II) reporting field,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In some embodiments, reporting the multiple pieces of codebook parameter information includes:

reporting the grouping information of the multiple channel measurement reference signal resources through a third field while reporting the multiple pieces of codebook parameter information, where the third field is included in a channel state information part one (CSI part I) reporting field,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is reported based on an index order of the multiple channel measurement reference signal resources.

In some embodiments, reporting the multiple pieces of codebook parameter information includes:

reporting target selection information of a frequency domain basis vector through a fourth field and reporting the grouping information of the multiple channel measurement reference signal resources through a fifth field while reporting the multiple pieces of codebook parameter information, where the fourth field is included in a channel state information part one (CSI part I) reporting field, and the fifth field is included in a channel state information part two (CSI part II) reporting field,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is indicated in a bitmap way.

In some embodiments, reporting the multiple pieces of codebook parameter information includes:

reporting the multiple pieces of codebook parameter information based on a higher-layer signaling,

where the higher-layer signaling includes at least one of the following: a medium access control (MAC) signaling or a radio resource control (RRC) signaling.

An embodiment of the present application further provides a method for reporting channel state information, including:

receiving multiple pieces of codebook parameter information reported from a terminal; and

determining a reporting way of the codebook parameter information, and decoding the codebook parameter information based on overhead or a bit width corresponding to the reporting way of the codebook parameter information, to obtain channel state information.

In some embodiments, determining the reporting way of the codebook parameter information includes:

obtaining a target codebook parameter selection result through a first field, where the first field is included in a channel state information part one (CSI part I) reporting field; and

determining the reporting way of the codebook parameter information based on the target codebook parameter selection result,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on multiple channel measurement reference signal resources.

In some embodiments, determining the reporting way of the codebook parameter information includes:

obtaining a frequency domain basis vector selection result through a second field, where the second field is included in a channel state information part two (CSI part II) reporting field; and

determining the reporting way of the codebook parameter information based on the frequency domain basis vector selection result,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In some embodiments, determining the reporting way of the codebook parameter information includes:

obtaining grouping information of multiple channel measurement reference signal resources through a third field, where the third field is included in a channel state information part one (CSI part I) reporting field; and

determining the reporting way of the codebook parameter information based on the grouping information of the multiple channel measurement reference signal resources,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is reported based on an index order of the multiple channel measurement reference signal resources.
In some embodiments, determining the reporting way of the codebook parameter information includes:

obtaining target selection information of a frequency domain basis vector through a fourth field, and obtaining grouping information of multiple channel measurement reference signal resources through a fifth field, where the fourth field is included in a channel state information part one (CSI part I) reporting field, and the fifth field is included in a channel state information part two (CSI part II) reporting field; and

determining the reporting way of the codebook parameter information based on the target selection information of the frequency domain basis vector and the grouping information of the multiple channel measurement reference signal resources,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, a target grouping result of the frequency domain basis vector is indicated in a bitmap way.

An embodiment of the present application further provides a terminal, including a memory, a transceiver and a processor,

where the memory is used for storing a computer program, the transceiver is used for sending and receiving data under control of the processor, and the processor is used for reading the computer program in the memory and performing steps of the method for reporting channel state information described above.

An embodiment of the present application further provides a network device, including a memory, a transceiver and a processor,

where the memory is used for storing a computer program, the transceiver is used for sending and receiving data under control of the processor, and the processor is used for reading the computer program in the memory and performing steps of the method for reporting channel state information described above.

An embodiment of the present application further provides a processor-readable storage medium, where the processor-readable storage medium stores a computer program, the computer program is used to cause a processor to perform steps of the methods for reporting channel state information described above.

In the method for reporting channel state information, the terminal and the network device provided by the embodiments of the present application, one or more target codebook parameters are determined based on the channel measurement information corresponding to the multiple channel measurement reference signal resources and/or the grouping information of the multiple channel measurement reference signal resources, and the multiple pieces of codebook parameter information is reported based on the target codebook parameter. The terminal may dynamically report different codebook parameters based on different channel measurement results, thereby being applicable to various CJT scenarios and effectively saving reporting overhead.

BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.

FIG. 1 is a first schematic flowchart of a method for reporting channel state information according to an embodiment of the present application;

FIG. 2 is a second schematic flowchart of a method for reporting channel state information according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for reporting channel state information according to an embodiment of the present application; and

FIG. 6 is a second schematic structural diagram of an apparatus for reporting channel state information according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions of the embodiments of the present application may be clearly and completely described in combination with the drawings of the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The solutions provided by the embodiments of the present application may be applied to a variety of systems, especially $5^{th}$ generation (5G) systems. For example, applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, names of terminal devices may also be different. For example, in a 5G system, the terminal device may be called a user equipment (UE). A wireless terminal device may communicate with one or more core networks (CN) via radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, or a user device, which is not limited in the embodiments of the present application.

The network device involved in the embodiments of the present application may be a base station, and the base station may include multiple cells providing services for a terminal. Depending on specific application scenarios, the base station may also be called an access point (AP), or may be a device in the access network that communicates with wireless terminal through one or more sectors on the air interface, or other names. The network device may be used to exchange received air frames with Internet protocol (IP) packets, and act as a router between wireless terminal and the rest of the access network, and the rest of the access network may include an Internet protocol (IP) communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved node B (HeNB), a relay node, a femto base station (femto), a pico base station (pico), etc., which are not limited in the embodiments of the present application. In some network structures, a network device may include a centralized unit (CU) node and a distributed unit (DU) node, and the centralized unit and the distributed unit may also be geographically separated.

Firstly, related technologies involved in the present application are introduced in the following.

A design of Type II codebook mainly considers a design of two-level codebook, where a first-level codebook W1 requires broadband feedback of spatial domain beam information, and a second-level codebook W2 requires subband feedback of frequency domain information. The second-level codebook W2 further includes linear merging coefficients of spatial domain beams of each subband. In new radio (NR) Rel-15, an Rel-15 Type II codebook is defined. It supports rank1 and rank2 codebooks based on linear merging of beams in an orthogonal beam group. Since the Rel-15 codebook requires subband feedback of merging coefficients, and feedback of each subband includes both subband phase coefficients and subband amplitude coefficients, in case that a quantity of subbands is large, feedback overhead required for feeding back coefficients of all subbands is huge. In NR Rel-16, a low-overhead Rel-16 eType II codebook is defined, which compresses coefficients of each subband and feeds back the compressed coefficients to a base station. Taking rank=1 as an example, for all subbands, the codebook may be expressed as:

$$\mathbf{W} = \mathbf{W}_1 \tilde{\mathbf{W}}_2 \mathbf{W}_f^H$$

$$= \begin{bmatrix} \mathbf{B}_0 & \mathbf{B}_1 & \cdots & \mathbf{B}_{L-1} & & & 0 \\ & 0 & & \mathbf{B}_0 & \mathbf{B}_1 & \cdots & \mathbf{B}_{L-1} \end{bmatrix} \cdot$$

$$\begin{bmatrix} p_{diff}(0,0)q(0,0) & p_{diff}(0,1)q(0,1) & \cdots & p_{diff}(0,M-1)q(0,M-1) \\ \vdots & & & \\ p_{diff}(L-1,0)q(L-1,0) & p_{diff}(L-1,1)q(L-1,1) & \cdots & p_{diff}(L-1,M-1)q(L-1,M-1) \\ p_{ref}\,p_{diff}(L,0)q(L,0) & p_{ref}\,p_{diff}(L,1)q(L,1) & \cdots & p_{ref}\,p_{diff}(L,M-1)q(L,M-1) \\ \vdots & & & \\ p_{ref}\,p_{diff}(2L-1,0)q(2L-1,0) & p_{ref}\,p_{diff}(2L-1,1)q(2L-1,1) & \cdots & p_{ref}\,p_{diff}(2L-1,M-1)q(2L-1,M-1) \end{bmatrix}$$

$$\cdot \begin{bmatrix} c_{0,0} & c_{0,1} & \cdots & c_{0,N_3-1} \\ c_{1,0} & c_{1,1} & \cdots & c_{1,N_3-1} \\ \vdots & & & \vdots \\ c_{M-1,0} & c_{M-1,1} & \cdots & c_{M-1,N_3-1} \end{bmatrix}$$

Orthogonal combined beams included in $\mathbf{W}_1$ are the same as the Type II codebook of Rel-15, $\tilde{\mathbf{W}}_2$ represents the compressed coefficient, $p_{diff}(i,j)$ represents a differential amplitude coefficient, $q(i, j)$ represents a phase coefficient, $p_{ref}$ represents a reference amplitude coefficient, and L represents a quantity of spatial domain candidate beams. In case that a strongest amplitude coefficient in $\tilde{\mathbf{W}}_2$ is located in a first polarization direction (i.e., first L rows in $\tilde{\mathbf{W}}_2$), the reference amplitude coefficient is located in a second polarization direction, as shown in the above expression. In case that a strongest amplitude coefficient in $\tilde{\mathbf{W}}_2$ is located in a second polarization direction (i.e., last L rows in $\tilde{\mathbf{W}}_2$), the reference amplitude coefficient is located in a first polarization direction, and is not repeated here. The differential amplitude coefficient, the phase coefficient and the reference amplitude coefficient all need to be fed back to the base station. Meanwhile, a terminal needs to report a location where the strongest amplitude coefficient is located, its corresponding differential amplitude coefficient is defined as 1, and the phase coefficient is defined as 0, which does not need to be reported. In addition, in order to further save feedback overhead, compressed coefficients in each layer of $\tilde{\mathbf{W}}_2$ do not need to be reported in full, and only non-zero coefficients in each layer of $\tilde{\mathbf{W}}_2$ need to be reported. For Rank=1 and Rank=2, the base station configures an upper limit of the quantity of non-zero coefficients reported by each layer to be K0. Since not all compressed coefficients are reported, each layer needs to indicate locations of corresponding reported non-zero coefficients. $\mathbf{W}_f$ represents a compressed basis vector, where the compressed basis vector includes M basis vectors, a length of each vector is $N_3$, and $N_3$ is determined by a quantity of CQI subbands configured by a system. In addition, the reference amplitude coefficient is quantized to 4 bits, and its value is $\left\{1, \left(\frac{1}{2}\right)^{\frac{1}{4}}, \left(\frac{1}{4}\right)^{\frac{1}{4}}, \left(\frac{1}{8}\right)^{\frac{1}{4}}, ...., \left(\frac{1}{2^{14}}\right)^{\frac{1}{4}}, 0\right\}$.

Referring to a principle of Type II codebook design, currently, a user equipment (UE) may reduce feedback overhead by reporting spatial domain information compressed basis vector (SD basis) and a frequency domain compressed basis vector (FD basis) based on channel measurement, and the UE is required to feed back subband merging coefficients of each subband information. For a coherent joint transmission (CJT) transmission scheme, due to a large difference in spatial domain information of different transmission points, the UE is currently supported to feed back spatial domain basis vector selection information calculated based on each transmission point. Referring to reporting of frequency domain basis vectors, two methods are currently supported, one method is similar to the spatial domain information, that is, the UE feeds back the frequency domain basis vector selection information $W_{f,1}^H, \;\ldots\ldots\, W_{f,N}^H$ calculated based on each transmission point. A specific codebook design scheme may refer to the following formula:

$$\begin{bmatrix} W_{1,1}\tilde{W}_{2,1}W_{f,1}^H \\ \vdots \\ W_{1,N}\tilde{W}_{2,N}W_{f,N}^H \end{bmatrix} \cdot$$

Another method is that the UE feeds back joint frequency domain basis vector selection information $W_f^H$

calculated based on multiple transmission points. A specific codebook design scheme may refer to the following formula:

$$\begin{bmatrix} W_{1,1}\widetilde{W}_{2,1}W_f^H \\ \vdots \\ W_{1,N}\widetilde{W}_{2,N}W_f^H \end{bmatrix}.$$

Based on the above discussion, the two codebook structures in the above background are applicable to a variety of scenarios. Therefore, in case that delay path information of each transmission point is quite different, the first method based on the calculation of each transmission point is more flexible and applicable to this scenario, and improves CJT transmission performance. However, in case that the delay path information of each transmission point is relatively close, the frequency domain information calculated by each transmission point is also relatively close. Therefore, jointly reporting the frequency domain information may further reduce the feedback overhead, but performance improvement may be attenuated. Therefore, the two methods are applicable to different CJT scenarios, each with its own advantages, but also with their own limitations.

The present application provides methods for reporting channel state information, a terminal and a network device, which may realize configuration and switching of codebook design information under an assumption of a coordinated multi-point transmission scheme. The two codebook design methods may be applicable to different scenarios, the UE may dynamically report parameters of different codebook designs based on different channel measurement information, and reporting overhead is further saved.

The methods and apparatuses are based on the same concept. Since principles of solving problems by the methods and the apparatuses are similar, implementations of the apparatuses and the methods can refer to each other, and the repeated parts will not be repeated.

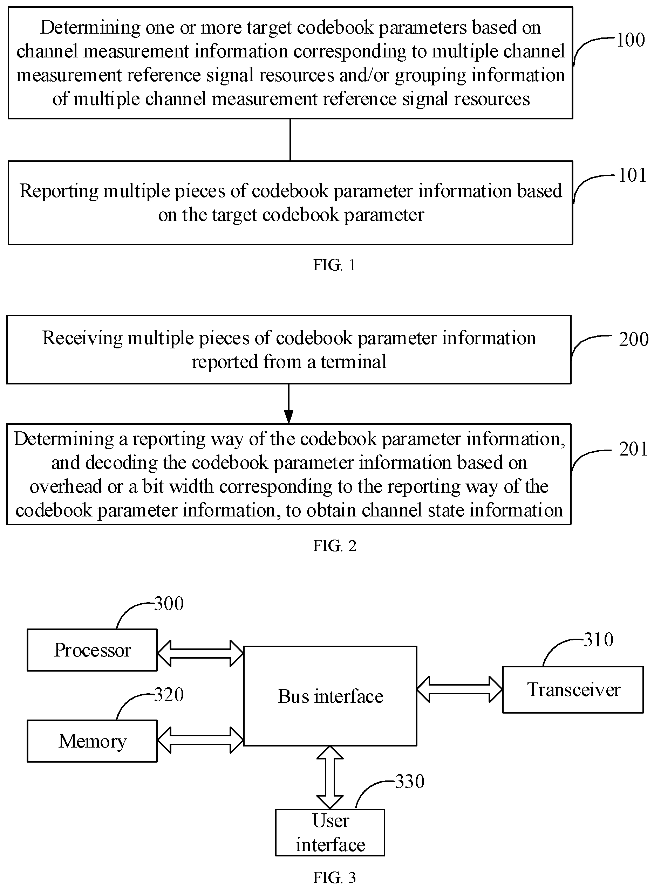

FIG. 1 is a first schematic flowchart of a method for reporting channel state information according to an embodiment of the present application. The method is performed by a terminal. As shown in FIG. 1, the method includes the following steps.

Step 100: determining one or more target codebook parameters based on channel measurement information corresponding to multiple channel measurement reference signal resources and/or grouping information of multiple channel measurement reference signal resources.

In an embodiment of the present application, a terminal side receives multiple channel measurement reference signals sent, based on a coherent joint transmission scheme, from a base station side, measures the multiple channel measurement reference signals, and obtains channel measurement information corresponding to the multiple channel measurement reference signal resources.

The target codebook parameter is used to indicate a structure used for reporting the codebook parameter information. In an embodiment, the terminal determines to adopt what structure to report the codebook parameter information based on the channel measurement information corresponding to multiple channel measurement reference signal resources and/or the grouping information of the multiple channel measurement reference signal resources.

For example, in case that the terminal determines that delay path information of each transmission point is significantly different based on the channel measurement information corresponding to multiple channel measurement reference signal resources, the terminal determines to feed back frequency domain basis vector selection information calculated based on each channel measurement reference signal resource.

For another example, in case that the terminal determines that delay path information of each transmission point is relatively close based on the channel measurement information corresponding to multiple channel measurement reference signal resources, the terminal determines to feed back j oint frequency domain basis vector selection information calculated based on the multiple channel measurement reference signal resources.

For another example, in case that the terminal determines that delay path information of a group of transmission points is relatively close based on the channel measurement information corresponding to multiple channel measurement reference signal resources, the terminal jointly reports frequency domain basis vector selection information calculated by at least one channel measurement reference signal resource in the group, and reports frequency domain basis vector selection information calculated by other channel measurement reference signal resources separately.

The reporting way of the codebook parameter information adopted by the terminal includes: the terminal feeds back the frequency domain basis vector selection information calculated based on each channel measurement reference signal resource. Or, the terminal feeds back the joint frequency domain basis vector selection information calculated based on the multiple channel measurement reference signal resources. Or, the terminal groups the channel measurement information corresponding to multiple channel measurement reference signal resources based on the grouping information of the multiple channel measurement reference signal resources, and for at least one channel measurement reference signal resource in the first group, frequency domain basis vector selection information calculated based on at least one channel measurement reference signal resource in a first group is reported jointly, and frequency domain basis vector selection information calculated based on each channel measurement reference signal resource in a second group is reported separately.

Step 101: reporting multiple pieces of codebook parameter information based on the target codebook parameter.

A structure adopted for reporting the codebook parameter information may be determined based on the target codebook parameter. After the structure adopted for reporting the codebook parameter information is determined, multiple pieces of codebook parameter information may be reported based on the structure.

The codebook parameter information includes spatial domain basis vector selection information, frequency domain basis vector selection information, subband merging coefficients, etc.

In the method for reporting channel state information provided by the embodiment of the present application, one or more target codebook parameters are determined based on the channel measurement information corresponding to the multiple channel measurement reference signal resources and/or the grouping information of the multiple channel measurement reference signal resources, and the multiple pieces of codebook parameter information is reported based on the target codebook parameter. The terminal may dynamically report different codebook parameters based on different channel measurement results, thereby being applicable to various CJT scenarios and effectively saving reporting overhead.

In some embodiments, the method further includes:
determining the grouping information of the multiple channel measurement reference signal resources based on a frequency domain basis vector selection result of the multiple channel measurement reference signal resources.

The frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

Based on the frequency domain basis vector selection results of the multiple channel measurement reference signal resources, the terminal takes channel measurement reference signal resources corresponding to frequency domain basis vector selection information reported separately based on each channel measurement reference signal resource into a group, and takes channel measurement reference signal resources corresponding to the frequency domain basis vector selection information reported jointly based on the multiple channel measurement reference signal resources in a group, thereby determining the grouping information of the multiple channel measurement reference signal resources.

In some embodiments, reporting the multiple pieces of codebook parameter information includes:

reporting a target codebook parameter selection result through a first field while reporting the multiple pieces of codebook parameter information, where the first field is included in a channel state information part one (CSI part I) reporting field,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on the multiple channel measurement reference signal resources.

In an embodiment, the first field is used to report the target codebook parameter selection result. The first field may be a newly added field.

For example, a value of the first field being 0 indicates that the codebook parameter information is reported based on the frequency domain basis vector selection information calculated based on each channel measurement reference signal resource, that is, in a per-transmission and reception point (per-TRP) method; and the value of the first field being 1 indicates that the codebook parameter information is reported based on the joint frequency domain basis vector selection information calculated based on the multiple channel measurement reference signal resources, that is, in a joint method.

In an embodiment, the value of the first field being 0 may also indicate that there is a co-phasing reporting amount in a channel state information part two (CSI part II) reporting field, and the value of the first field being 1 indicates that there is no co-phasing reporting amount in the CSI part II reporting field.

In some embodiments, reporting the multiple pieces of codebook parameter information includes:

reporting a frequency domain basis vector selection result through a second field while reporting the multiple pieces of codebook parameter information, where the second field is included in a channel state information part two (CSI part II) reporting field,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In an embodiment, the second field is used to report the frequency domain basis vector selection result. The frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

The second field may be a newly added field in the CSI part II reporting field, or may be an existing field in the CSI part II reporting field. The present application does not make limitation on this.

For example, a value of a frequency domain basis vector (N-1) being N/A or 0 indicates that selection information for the frequency domain basis vector (N-1) is reported jointly based on the multiple channel measurement reference signal resources, that is, in a joint method.

For another example, a value in co-phasing being N/A or 0 indicates that the frequency domain basis vector selection information is reported jointly based on the multiple channel measurement reference signal resources, that is, in a joint method.

In some embodiments, reporting the multiple pieces of codebook parameter information includes:

reporting the grouping information of the multiple channel measurement reference signal resources through a third field while reporting the multiple pieces of codebook parameter information, where the third field is included in a channel state information part one (CSI part I) reporting field,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In an embodiment, the third field is used to report the grouping information of the multiple channel measurement reference signal resources.

In some embodiments, the grouping information of the multiple channel measurement reference signal resources is reported based on an index order of the multiple channel measurement reference signal resources.

In some embodiments, reporting the multiple pieces of codebook parameter information includes:

reporting target selection information of a frequency domain basis vector through a fourth field and reporting the grouping information of the multiple channel measurement reference signal resources through a fifth field while reporting the multiple pieces of codebook parameter information, where the fourth field is included in a channel state information part one (CSI part I) reporting field, and the fifth field is included in a channel state information part two (CSI part II) reporting field,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In an embodiment, the fourth field is used to report the target selection information of the frequency domain basis vector. The fifth field is used to report the grouping information of the multiple channel measurement reference signal resources.

For example, the fifth field may be newly added to the CSI part II reporting field to report the grouping information of the multiple channel measurement reference signal resources, that is, to report which transmission points are jointed.

For example, joint grouping may be represented by values of some frequency domain basis vectors being N/A or 0.

In an embodiment, joint grouping may be represented by some variables in co-phasing being N/A or 0.

In some embodiments, the grouping information of the multiple channel measurement reference signal resources is indicated in a bitmap way.

In an embodiment, the grouping information of the multiple channel measurement reference signal resources may be reported by pre-defining a TRP grouping combination table bitmap and reporting the specific values in the table.

In some embodiments, reporting the multiple pieces of codebook parameter information includes:

reporting the multiple pieces of codebook parameter information based on a higher-layer signaling,
where the higher-layer signaling includes at least one of the following: a medium access control (MAC) signaling or a radio resource control (RRC) signaling.

In an embodiment, the higher-layer signaling carries a CSI codebook configuration parameter, and the terminal may determine a reporting way of the codebook parameter information based on the CSI codebook configuration parameter.

For example, based on a higher-layer parameter such as 'CJTcodebookmode1', the terminal side may feed back the multiple pieces of codebook parameter information by reporting the joint frequency domain basis vector selection information calculated based on the multiple channel measurement reference signal resources.

For example, based on a higher-layer parameter such as 'CJTcodebookmode2', the terminal side may feed back the multiple pieces of codebook parameter information by reporting the frequency domain basis vector selection information calculated based on each channel measurement reference signal resource separately.

In the method for reporting channel state information provided by the embodiment of the present application, one or more target codebook parameters are determined based on the channel measurement information corresponding to the multiple channel measurement reference signal resources and/or the grouping information of the multiple channel measurement reference signal resources, and the multiple pieces of codebook parameter information is reported based on the target codebook parameter. The terminal may dynamically report different codebook parameters based on different channel measurement results, thereby being applicable to various CJT scenarios and effectively saving reporting overhead.

FIG. 2 is a second schematic flowchart of a method for reporting channel state information according to an embodiment of the present application. The method is performed by a network device. As shown in FIG. 2, the method includes the following steps.

Step 200: receiving multiple pieces of codebook parameter information reported from a terminal.

Step 201: determining a reporting way of the codebook parameter information, and decoding the codebook parameter information based on overhead or a bit width corresponding to the reporting way of the codebook parameter information, to obtain channel state information.

In an embodiment, the network device receives the multiple pieces of codebook parameter information reported from the terminal and determines the reporting way of the codebook parameter information.

In some embodiments, the reporting way of the codebook parameter information includes: the terminal feeds back the frequency domain basis vector selection information calculated based on each channel measurement reference signal resource. Or, the terminal feeds back the joint frequency domain basis vector selection information calculated based on the multiple channel measurement reference signal resources. Or, the terminal groups the channel measurement information corresponding to multiple channel measurement reference signal resources based on the grouping information of the multiple channel measurement reference signal resources, and for at least one channel measurement reference signal resource in the first group, frequency domain basis vector selection information calculated based on at least one channel measurement reference signal resource in a first group is reported jointly, and frequency domain basis vector selection information calculated based on each channel measurement reference signal resource in a second group is reported separately.

After the network device determines the reporting way of the codebook parameter information, the network device decodes the codebook parameter information based on overhead or a bit width corresponding to the reporting way of the codebook parameter information to obtain the channel state information.

In the method for reporting channel state information provided by the embodiment of the present application, the network device determines the reporting way of the codebook parameter information by receiving the multiple pieces of codebook parameter information reported from the terminal, and decodes the codebook parameter information based on the overhead or the bit width corresponding to the reporting way of the codebook parameter information to obtain the channel state information, which may improve decoding efficiency of the network device. The terminal may dynamically report different codebook parameters based on different channel measurement results, thereby being applicable to various CJT scenarios and effectively saving reporting overhead.

In some embodiments, determining the reporting way of the codebook parameter information includes:

obtaining a target codebook parameter selection result through a first field, where the first field is included in a channel state information part one (CSI part I) reporting field; and

determining the reporting way of the codebook parameter information based on the target codebook parameter selection result,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on multiple channel measurement reference signal resources.

In an embodiment, the first field is a field in the CSI part I reporting field, and the first field is used to report the target codebook parameter selection result. The first field may be a newly added field.

In an embodiment, the network device decodes the CSI and the CSI part I reporting field based on an information bit in the following Table 1 to determine the target codebook parameter selection result.

| CSI part I | CSI part II |
|---|---|
| Rank Indicator (RI) (if reported) <br> Channel quality indicator (CQI) <br> Total quantity of non-zero coefficients selected for all layers <br> Newly added: CJT codebook selection result (target codebook parameter selection result, whose value is 0 or 1) | Precoding matrix indicator (PMI) |

For example, a value of the first field being 0 indicates that the codebook parameter information is reported based on the frequency domain basis vector selection information calculated based on each channel measurement reference signal resource, that is, in a per-TRP method; and the value of the first field being 1 indicates that the codebook parameter information is reported based on the joint frequency domain basis vector selection information calculated based on the multiple channel measurement reference signal resources, that is, in a joint method.

In an embodiment, the value of the first field being 0 may also indicate that there is a co-phasing reporting amount in a channel state information part two (CSI part II) reporting field, and the value of the first field being 1 indicates that there is no co-phasing reporting amount in the CSI part II reporting field.

In some embodiments, determining the reporting way of the codebook parameter information includes:

obtaining a frequency domain basis vector selection result through a second field, where the second field is included in a channel state information part two (CSI part II) reporting field; and

determining the reporting way of the codebook parameter information based on the frequency domain basis vector selection result,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In an embodiment, the second field is a field in the CSI part II reporting field, and the second field is used to report the frequency domain basis vector selection result. The frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

The second field may be a newly added field in the CSI part II reporting field, or may be an existing field in the CSI part II reporting field. The present application does not make limitation on this.

For example, a value of a frequency domain basis vector (N-1) being N/A or 0 indicates that selection information for the frequency domain basis vector (N-1) is reported jointly based on the multiple channel measurement reference signal resources, that is, in a joint method.

For another example, a value in co-phasing being N/A or 0 indicates that the frequency domain basis vector selection information is reported jointly based on the multiple channel measurement reference signal resources, that is, in a joint method.

In some embodiments, determining the reporting way of the codebook parameter information includes:

obtaining grouping information of multiple channel measurement reference signal resources through a third field, where the third field is included in a channel state information part one (CSI part I) reporting field; and

determining the reporting way of the codebook parameter information based on the grouping information of the multiple channel measurement reference signal resources,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In an embodiment, the third field is a field in the CSI part I reporting field, and the third field is used to report the grouping information of the multiple channel measurement reference signal resources.

In an embodiment, the network device decodes the CSI and the CSI part I reporting field based on an information bit in the following Table 2 to determine the grouping information of the multiple channel measurement reference signal resources.

| CSI part I | CSI part II |
|---|---|
| RI (if reported) <br> CQI <br> Total quantity of non-zero coefficients selected for all layers <br> Newly added: grouping information composed of K information bits | PMI |

In some embodiments, the grouping information of the multiple channel measurement reference signal resources is reported based on an index order of the multiple channel measurement reference signal resources.

In some embodiments, determining the reporting way of the codebook parameter information includes:

obtaining target selection information of a frequency domain basis vector through a fourth field, and obtaining grouping information of multiple channel measurement reference signal resources through a fifth field, where the fourth field is included in a channel state information part one (CSI part I) reporting field, and the fifth field is included in a channel state information part two (CSI part II) reporting field; and

determining the reporting way of the codebook parameter information based on the target selection information of the frequency domain basis vector and the grouping information of the multiple channel measurement reference signal resources,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In an embodiment, the fourth field is a field in the CSI part I reporting field, and the fourth field is used to report the target selection information of the frequency domain basis vector.

The fifth field is a field in the CSI part II reporting field, and the fifth field is used to report the grouping information of the multiple channel measurement reference signal resources.

For example, the fifth field may be newly added to the CSI part II reporting field to report the grouping information of the multiple channel measurement reference signal resources, that is, to report which transmission points are jointed.

For example, joint grouping may be represented by values of some frequency domain basis vectors being N/A or 0.

In an embodiment, joint grouping may be represented by some variables in co-phasing being N/A or 0.

For example, if the terminal reports channel measurement information corresponding to Y channel measurement reference signal resources based on a joint channel measurement result, such as Y=4, 8 bits may be added to report the target selection information of the selected frequency domain basis vector and the grouping information of the multiple channel measurement reference signal resources.

For example, in case that FD basis vectors of TRP_1,2 are relatively close (based on measurement results of channel measurement reference signals CMR 1,2), and TRP_3,4 FD basis vectors are relatively close, 0011 is reported.

For example, in case that FD basis vectors of TRP_1,2,3 are relatively close (based on measurement results of CMR 1,2,3), 0001 is reported.

For example, in case that frequency domain basis vectors of four TRP measurements are not close, 0123 is reported.

In some embodiments, a target grouping result of the frequency domain basis vector is indicated in a bitmap way.

In an embodiment, the grouping information of the multiple channel measurement reference signal resources may be reported by pre-defining a TRP grouping combination table bitmap and reporting the specific values in the table.

In some embodiments, the method further includes:

sending a higher-layer signaling to the terminal, where the higher-layer signaling carries a CSI codebook configuration parameter used for indicating the reporting way of the codebook parameter information.

For example, based on a higher-layer parameter such as 'CJTcodebookmode1', the terminal side may feed back the multiple pieces of codebook parameter information by reporting the joint frequency domain basis vector selection information calculated based on the multiple channel measurement reference signal resources.

For example, based on a higher-layer parameter such as 'CJTcodebookmode2', the terminal side may feed back the multiple pieces of codebook parameter information by reporting the frequency domain basis vector selection information calculated based on each channel measurement reference signal resource separately.

In the method for reporting channel state information provided by the embodiment of the present application, the terminal may dynamically report different codebook parameters based on different channel measurement results, thereby being applicable to various CJT scenarios and effectively saving reporting overhead. Accordingly, the network device may perform effective decoding.

FIG. 3 is a schematic structural diagram of a terminal according to an embodiment of the present application. As shown in FIG. 3, the terminal includes a memory 320, a transceiver 310, and a processor 300,

where the memory 320 is used for storing a computer program, the transceiver 310 is used for receiving and sending data under control of the processor 320, and the processor 300 is used for reading the computer program in the memory and performing the following steps:

determining one or more target codebook parameters based on channel measurement information corresponding to multiple channel measurement reference signal resources and/or grouping information of multiple channel measurement reference signal resources; and

reporting multiple pieces of codebook parameter information based on the target codebook parameter.

In some embodiments, the processor is further used for:

determining the grouping information of the multiple channel measurement reference signal resources based on a frequency domain basis vector selection result of the multiple channel measurement reference signal resources.

In some embodiments, reporting the multiple pieces of codebook parameter information includes:

reporting a target codebook parameter selection result through a first field while reporting the multiple pieces of codebook parameter information, where the first field is included in a channel state information part one (CSI part I) reporting field,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on the multiple channel measurement reference signal resources.

In some embodiments, reporting the multiple pieces of codebook parameter information includes:

reporting a frequency domain basis vector selection result through a second field while reporting the multiple pieces of codebook parameter information, where the second field is included in a channel state information part two (CSI part II) reporting field,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In some embodiments, reporting the multiple pieces of codebook parameter information includes:

reporting the grouping information of the multiple channel measurement reference signal resources through a third field while reporting the multiple pieces of codebook parameter information, where the third field is included in a channel state information part one (CSI part I) reporting field,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is reported based on an index order of the multiple channel measurement reference signal resources.

In some embodiments, reporting the multiple pieces of codebook parameter information includes:

reporting target selection information of a frequency domain basis vector through a fourth field and reporting the grouping information of the multiple channel measurement reference signal resources through a fifth field while reporting the multiple pieces of codebook parameter information, where the fourth field is included in a channel state information part one (CSI part I) reporting field, and the fifth field is included in a channel state information part two (CSI part II) reporting field,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is indicated in a bitmap way.

In some embodiments, reporting the multiple pieces of codebook parameter information includes:

reporting the multiple pieces of codebook parameter information based on a higher-layer signaling,

where the higher-layer signaling includes at least one of the following: a medium access control (MAC) signaling or a radio resource control (RRC) signaling.

The transceiver 310 is used for receiving and sending data under the control of the processor 300. In FIG. 3, a bus architecture may include any number of interconnected buses and bridges, which are linked together through various circuits of one or more processors represented by the processor 300 and one or more memories represented by the memory 320. The bus architecture may also link together various other circuits, such as peripherals, voltage regulators, and power management circuits, etc., which are well known in the art, and therefore are not further described in the present application. The bus interface provides an interface. The transceiver 310 may include multiple elements, i.e., including a transmitter and a receiver, units for providing communication with various other devices over transmission media including wireless channels, wired channels, fiber optic cables, and the like. The processor 300 is responsible for managing the bus architecture and general processing, and the memory 320 may store data used by the processor 300 when performing operations. The processor 300 may be a central processing unit (CPU), an application specific integrated circuit (ASIC), a field programmable gate array (FPGA) or a complex programmable logic device (CPLD), and the processor may also adopt a multi-core architecture. The processor 300 calls the computer program stored in the memory 320 to perform any one of the methods provided by the embodiments of the present application according to an obtained executable instruction. The processor and the memory may also be arranged physically separately.

The terminal device further includes a user interface 330. For different UEs, the user interface 330 may also be an interface that may be connected to required devices externally or internally. The connected devices include but are not limited to a small keyboard, a display, a speaker, a microphone, a joystick, etc.

It should be noted that the above-mentioned terminal device provided by the embodiment of the present application can implement all the method steps implemented in the above-mentioned terminal device side method embodiments and can achieve the same effect. The parts and beneficial effects of the embodiment that are the same as those of the method embodiments is not be described in detail here.

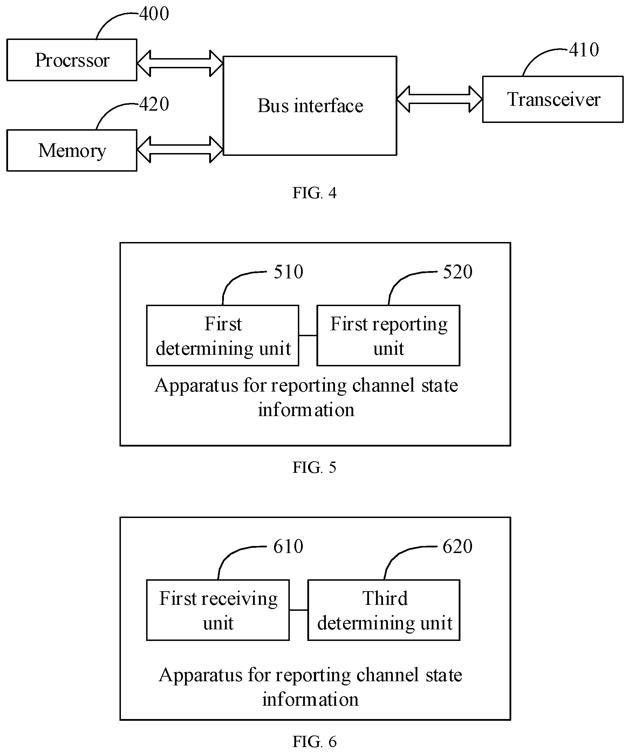

FIG. 4 is a schematic structural diagram of a network device according to an embodiment of the present application. As shown in FIG. 4, the network device includes: a memory 420, a transceiver 410, and a processor 400, where the memory 420 is used for storing a computer program, the transceiver 410 is used for receiving and sending data under control of the processor 400, and the processor 400 is used for reading the computer program in the memory and performing the following steps:

receiving multiple pieces of codebook parameter information reported from a terminal; and

determining a reporting way of the codebook parameter information, and decoding the codebook parameter information based on overhead or a bit width corresponding to the reporting way of the codebook parameter information, to obtain channel state information.

In some embodiments, determining the reporting way of the codebook parameter information includes:

obtaining a target codebook parameter selection result through a first field, where the first field is included in a channel state information part one (CSI part I) reporting field; and

determining the reporting way of the codebook parameter information based on the target codebook parameter selection result,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on multiple channel measurement reference signal resources.

In some embodiments, determining the reporting way of the codebook parameter information includes:

obtaining a frequency domain basis vector selection result through a second field, where the second field is included in a channel state information part two (CSI part II) reporting field; and

determining the reporting way of the codebook parameter information based on the frequency domain basis vector selection result,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In some embodiments, determining the reporting way of the codebook parameter information includes:

obtaining grouping information of multiple channel measurement reference signal resources through a third field, where the third field is included in a channel state information part one (CSI part I) reporting field; and

determining the reporting way of the codebook parameter information based on the grouping information of the multiple channel measurement reference signal resources,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is reported based on an index order of the multiple channel measurement reference signal resources.

In some embodiments, determining the reporting way of the codebook parameter information includes:

obtaining target selection information of a frequency domain basis vector through a fourth field, and obtaining grouping information of multiple channel measurement reference signal resources through a fifth field, where the fourth field is included in a channel state information part one (CSI part I) reporting field, and the fifth field is included in a channel state information part two (CSI part II) reporting field; and

determining the reporting way of the codebook parameter information based on the target selection information of the frequency domain basis vector and the grouping information of the multiple channel measurement reference signal resources,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, a target grouping result of the frequency domain basis vector is indicated in a bitmap way.

It should be noted that the above-mentioned network device provided by the embodiment of the present application can implement all the method steps implemented in the above-mentioned network device side method embodiments and can achieve the same effect. The parts and beneficial effects of the embodiment that are the same as those of the method embodiments is not be described in detail here.

FIG. 5 is a first schematic structural diagram of an apparatus for reporting channel state information according to an embodiment of the present application. As shown in FIG. 5, the channel state information reporting device includes:

a first determining unit 510, used for determining one or more target codebook parameters based on channel measurement information corresponding to multiple channel measurement reference signal resources and/or grouping information of multiple channel measurement reference signal resources; and

a first reporting unit 520, used for reporting multiple pieces of codebook parameter information based on the target codebook parameter.

In some embodiments, the apparatus further includes:

a second determining unit, used for determining the grouping information of the multiple channel measurement reference signal resources based on a frequency domain basis vector selection result of the multiple channel measurement reference signal resources.

In some embodiments, reporting the multiple pieces of codebook parameter information includes:

reporting a target codebook parameter selection result through a first field while reporting the multiple pieces of codebook parameter information, where the first field is included in a channel state information part one (CSI part I) reporting field,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on the multiple channel measurement reference signal resources.

In some embodiments, reporting the multiple pieces of codebook parameter information includes:

reporting a frequency domain basis vector selection result through a second field while reporting the multiple pieces of codebook parameter information, where the second field is included in a channel state information part two (CSI part II) reporting field,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In some embodiments, reporting the multiple pieces of codebook parameter information includes:

reporting the grouping information of the multiple channel measurement reference signal resources through a third field while reporting the multiple pieces of codebook parameter information, where the third field is included in a channel state information part one (CSI part I) reporting field,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is reported based on an index order of the multiple channel measurement reference signal resources.

In some embodiments, reporting the multiple pieces of codebook parameter information includes:

reporting target selection information of a frequency domain basis vector through a fourth field and reporting the grouping information of the multiple channel measurement reference signal resources through a fifth field while reporting the multiple pieces of codebook parameter information, where the fourth field is included in a channel state information part one (CSI part I) reporting field, and the fifth field is included in a channel state information part two (CSI part II) reporting field,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is indicated in a bitmap way.

In some embodiments, reporting the multiple pieces of codebook parameter information includes:

reporting the multiple pieces of codebook parameter information based on a higher-layer signaling,

where the higher-layer signaling includes at least one of the following: a medium access control (MAC) signaling or a radio resource control (RRC) signaling.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above-mentioned apparatus for reporting channel state information provided by the embodiments of the present application may implement all the method steps implemented by the above-mentioned method embodiments, and may achieve the same effect. The parts and beneficial effects of the present embodiment that are the same as those of the method embodiment is not described in detail here.

FIG. 6 is a second schematic structural diagram of an apparatus for reporting channel state information according to an embodiment of the present application. As shown in FIG. 6, the channel state information reporting device includes:

a first receiving unit 610, used for receiving multiple pieces of codebook parameter information reported from a terminal; and

a third determining unit 620, used for determining a reporting way of the codebook parameter information, and decoding the codebook parameter information based on overhead or a bit width corresponding to the reporting way of the codebook parameter information, to obtain channel state information.

In some embodiments, determining the reporting way of the codebook parameter information includes:

obtaining a target codebook parameter selection result through a first field, where the first field is included in a channel state information part one (CSI part I) reporting field; and

determining the reporting way of the codebook parameter information based on the target codebook parameter selection result,

where the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on multiple channel measurement reference signal resources.

In some embodiments, determining the reporting way of the codebook parameter information includes:

obtaining a frequency domain basis vector selection result through a second field, where the second field is included in a channel state information part two (CSI part II) reporting field; and

determining the reporting way of the codebook parameter information based on the frequency domain basis vector selection result,

where the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

In some embodiments, determining the reporting way of the codebook parameter information includes:

obtaining grouping information of multiple channel measurement reference signal resources through a third field, where the third field is included in a channel state information part one (CSI part I) reporting field; and

determining the reporting way of the codebook parameter information based on the grouping information of the multiple channel measurement reference signal resources,

where the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, the grouping information of the multiple channel measurement reference signal resources is reported based on an index order of the multiple channel measurement reference signal resources.

In some embodiments, determining the reporting way of the codebook parameter information includes:

obtaining target selection information of a frequency domain basis vector through a fourth field, and obtaining grouping information of multiple channel measurement reference signal resources through a fifth field, where the fourth field is included in a channel state information part one (CSI part I) reporting field, and the fifth field is included in a channel state information part two (CSI part II) reporting field; and

determining the reporting way of the codebook parameter information based on the target selection information of the frequency domain basis vector and the grouping information of the multiple channel measurement reference signal resources,

where the target selection information of the frequency domain basis vector is used to indicate frequency domain basis vector selection information corresponding to multiple channel measurement reference signals; and

the grouping information of the multiple channel measurement reference signal resources is used to indicate a first group and a second group, where frequency domain basis vector selection information calculated based on at least one channel measurement reference signal resource in the first group is reported jointly, and frequency domain basis vector selection information calculated based on each channel measurement reference signal resource in the second group is reported separately.

In some embodiments, a target grouping result of the frequency domain basis vector is indicated in a bitmap way.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above-mentioned apparatus for reporting channel state information provided by the embodiments of the present application may implement all the method steps implemented by the above-mentioned method embodiments, and may achieve the same effect. The parts and beneficial effects of the present embodiment that are the same as those of the method embodiment is not described in detail here.

On the other hand, an embodiment of the present application further provides a processor-readable storage medium, where the processor-readable storage medium stores a computer program, and the computer program is used to cause a processor to perform the methods provided by the above embodiments and may achieve the same technical effects, which will not be repeated here.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As may be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It may be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It may be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1.  A method for reporting channel state information, performed by a terminal, comprising:

    determining one or more target codebook parameters based on channel measurement information corresponding to multiple channel measurement reference signal resources and/or grouping information of multiple channel measurement reference signal resources; and
    reporting multiple pieces of codebook parameter information based on the target codebook parameter.

2.  The method of claim 1, further comprising:
    determining the grouping information of the multiple channel measurement reference signal resources based on a frequency domain basis vector selection result of the multiple channel measurement reference signal resources.

3.  The method of claim 1, wherein reporting the multiple pieces of codebook parameter information comprises:

    reporting a target codebook parameter selection result through a first field while reporting the multiple pieces of codebook parameter information, wherein the first field is comprised in a channel state information part one, CSI part I, reporting field,
    wherein the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on the multiple channel measurement reference signal resources.

4.  The method of claim 1, wherein reporting the multiple pieces of codebook parameter information comprises:

    reporting a frequency domain basis vector selection result through a second field while reporting the multiple pieces of codebook parameter information, wherein the second field is comprised in a channel state information part two, CSI part II, reporting field,
    wherein the frequency domain basis vector selection result is used to indicate whether the frequency domain basis vector selection information is reported separately based on each channel measurement reference signal resource, or the frequency domain basis vector selection information is reported jointly based on the multiple channel measurement reference signal resources.

5.  The method of claim 1, wherein reporting the multiple pieces of codebook parameter information comprises:

    reporting the grouping information of the multiple channel measurement reference signal resources through a third field while reporting the multiple pieces of codebook parameter information, wherein the third field is comprised in a channel state information part one, CSI part I, reporting field,
    wherein the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

6. The method of claim 5, wherein the grouping information of the multiple channel measurement reference signal resources is reported based on an index order of the multiple channel measurement reference signal resources.

7. The method of claim 1, wherein reporting the multiple pieces of codebook parameter information comprises:

reporting target selection information of a frequency domain basis vector through a fourth field and reporting the grouping information of the multiple channel measurement reference signal resources through a fifth field while reporting the multiple pieces of codebook parameter information, wherein the fourth field is comprised in a channel state information part one, CSI part **I,** reporting field, and the fifth field is comprised in a channel state information part two, CSI part **II,** reporting field,

wherein the target selection information of the frequency domain basis vector is used to indicate frequency domain basis vector selection information corresponding to multiple channel measurement reference signals; and

the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

8. The method of claim 7, wherein the grouping information of the multiple channel measurement reference signal resources is indicated in a bitmap way.

9. The method of claim 1, wherein reporting the multiple pieces of codebook parameter information comprises:

reporting the multiple pieces of codebook parameter information based on a higher-layer signaling, wherein the higher-layer signaling comprises at least one of the following: a medium access control, MAC, signaling or a radio resource control, RRC, signaling.

10. A method for reporting channel state information, performed by a network device, comprising:

receiving multiple pieces of codebook parameter information reported from a terminal; and determining a reporting way of the codebook parameter information, and decoding the codebook parameter information based on overhead or a bit width corresponding to the reporting way of the codebook parameter information, to obtain channel state information.

11. The method of claim 10, wherein determining the reporting way of the codebook parameter information comprises:

obtaining a target codebook parameter selection result through a first field, wherein the first field is comprised in a channel state information part one, CSI part **I,** reporting field; and determining the reporting way of the codebook parameter information based on the target codebook parameter selection result,

wherein the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on multiple channel measurement reference signal resources.

12. The method of claim 10, wherein determining the reporting way of the codebook parameter information comprises:

obtaining a frequency domain basis vector selection result through a second field, wherein the second field is comprised in a channel state information part two, CSI part II, reporting field; and determining the reporting way of the codebook parameter information based on the frequency domain basis vector selection result,

wherein the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

13. The method of claim 10, wherein determining the reporting way of the codebook parameter information comprises:

obtaining grouping information of multiple channel measurement reference signal resources through a third field, wherein the third field is comprised in a channel state information part one, CSI part I, reporting field; and determining the reporting way of the codebook parameter information based on the grouping information of the multiple channel measurement reference signal resources,
wherein the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

14. The method of claim 13, wherein the grouping information of the multiple channel measurement reference signal resources is reported based on an index order of the multiple channel measurement reference signal resources.

15. The method of claim 10, wherein determining the reporting way of the codebook parameter information comprises:

obtaining target selection information of a frequency domain basis vector through a fourth field, and obtaining grouping information of multiple channel measurement reference signal resources through a fifth field, wherein the fourth field is comprised in a channel state information part one, CSI part I, reporting field, and the fifth field is comprised in a channel state information part two, CSI part II, reporting field; and
determining the reporting way of the codebook parameter information based on the target selection information of the frequency domain basis vector and the grouping information of the multiple channel measurement reference signal resources,
wherein the target selection information of the frequency domain basis vector is used to indicate frequency domain basis vector selection information corresponding to multiple channel measurement reference signals; and
the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

16. The method of claim 15, wherein a target grouping result of the frequency domain basis vector is indicated in a bitmap way.

17. A terminal, comprising a memory, a transceiver and a processor,
wherein the memory is used for storing a computer program, the transceiver is used for receiving and sending data under control of the processor, and the processor is used for reading the computer program in the memory and performing the method of any one of claims 1 to 9.

18. A network device, comprising a memory, a transceiver and a processor,
wherein the memory is used for storing a computer program, the transceiver is used for receiving and sending data under control of the processor, and the processor is used for reading the computer program in the memory and performing the method of any one of claims 10 to 16.

19. An apparatus for reporting channel state information, comprising:

a first determining unit, used for determining one or more target codebook parameters based on channel measurement information corresponding to multiple channel measurement reference signal resources and/or grouping information of multiple channel measurement reference signal resources; and
a first reporting unit, used for reporting multiple pieces of codebook parameter information based on the target codebook parameter.

20. The apparatus of claim 19, further comprising:

a second determining unit, used for determining the grouping information of the multiple channel measurement reference signal resources based on a frequency domain basis vector selection result of the multiple channel measurement reference signal resources.

21. The apparatus of claim 19, wherein the first reporting unit is used for:

reporting a target codebook parameter selection result through a first field while reporting the multiple pieces of codebook parameter information, wherein the first field is comprised in a channel state information part one, CSI part I, reporting field,
wherein the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on the multiple channel measurement reference signal resources.

22. The apparatus of claim 19, wherein the first reporting unit is used for:

reporting a frequency domain basis vector selection result through a second field while reporting the multiple pieces of codebook parameter information, wherein the second field is comprised in a channel state information part two, CSI part II, reporting field,
wherein the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

23. The apparatus of claim 19, wherein the first reporting unit is used for:

reporting the grouping information of the multiple channel measurement reference signal resources through a third field while reporting the multiple pieces of codebook parameter information, wherein the third field is comprised in a channel state information part one, CSI part I, reporting field,
wherein the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

24. The apparatus of claim 23, wherein the grouping information of the multiple channel measurement reference signal resources is reported based on an index order of the multiple channel measurement reference signal resources.

25. The apparatus of claim 19, wherein the first reporting unit is used for:

reporting target selection information of a frequency domain basis vector through a fourth field and reporting the grouping information of the multiple channel measurement reference signal resources through a fifth field while reporting the multiple pieces of codebook parameter information, wherein the fourth field is comprised in a channel state information part one, CSI part I, reporting field, and the fifth field is comprised in a channel state information part two, CSI part II, reporting field,
wherein the target selection information of the frequency domain basis vector is used to indicate frequency domain basis vector selection information corresponding to multiple channel measurement reference signals; and
the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

26. The apparatus of claim 25, wherein the grouping information of the multiple channel measurement reference signal resources is indicated in a bitmap way.

**27.** The apparatus of claim 19, wherein the first reporting unit is used for:

reporting the multiple pieces of codebook parameter information based on a higher-layer signaling, wherein the higher-layer signaling comprises at least one of the following: a medium access control, MAC, signaling or a radio resource control, RRC, signaling.

**28.** An apparatus for reporting channel state information, comprising:

a first receiving unit, used for receiving multiple pieces of codebook parameter information reported from a terminal; and
a third determining unit, used for determining a reporting way of the codebook parameter information, and decoding the codebook parameter information based on overhead or a bit width corresponding to the reporting way of the codebook parameter information, to obtain channel state information.

**29.** The apparatus of claim 28, wherein determining the reporting way of the codebook parameter information comprises:

obtaining a target codebook parameter selection result through a first field, wherein the first field is comprised in a channel state information part one, CSI part I, reporting field; and
determining the reporting way of the codebook parameter information based on the target codebook parameter selection result,
wherein the target codebook parameter selection result is used to indicate whether the codebook parameter information is reported based on frequency domain basis vector selection information calculated based on each channel measurement reference signal resource, or the codebook parameter information is reported based on joint frequency domain basis vector selection information calculated based on multiple channel measurement reference signal resources.

**30.** The apparatus of claim 28, wherein determining the reporting way of the codebook parameter information comprises:

obtaining a frequency domain basis vector selection result through a second field, wherein the second field is comprised in a channel state information part two, CSI part II, reporting field; and
determining the reporting way of the codebook parameter information based on the frequency domain basis vector selection result,
wherein the frequency domain basis vector selection result is used to indicate whether the frequency domain basis vector selection information is reported separately based on each channel measurement reference signal resource, or the frequency domain basis vector selection information is reported jointly based on multiple channel measurement reference signal resources.

**31.** The apparatus of claim 28, wherein determining the reporting way of the codebook parameter information comprises:

obtaining grouping information of multiple channel measurement reference signal resources through a third field, wherein the third field is comprised in a channel state information part one, CSI part I, reporting field; and
determining the reporting way of the codebook parameter information based on the grouping information of the multiple channel measurement reference signal resources,
wherein the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

**32.** The apparatus of claim 31, wherein the grouping information of the multiple channel measurement reference signal resources is reported based on an index order of the multiple channel measurement reference signal resources.

**33.** The apparatus of claim 28, wherein determining the reporting way of the codebook parameter information comprises:

obtaining target selection information of a frequency domain basis vector through a fourth field, and obtaining grouping information of multiple channel measurement reference signal resources through a fifth field, wherein the fourth field is comprised in a channel state information part one, CSI part I, reporting field, and the fifth field is comprised in a channel state information part two, CSI part II, reporting field; and

determining the reporting way of the codebook parameter information based on the target selection information of the frequency domain basis vector and the grouping information of the multiple channel measurement reference signal resources,

wherein the target selection information of the frequency domain basis vector is used to indicate frequency domain basis vector selection information corresponding to multiple channel measurement reference signals; and

the grouping information of the multiple channel measurement reference signal resources is used to indicate a first group and a second group, wherein frequency domain basis vector selection information calculated based on at least one channel measurement reference signal resource in the first group is reported jointly, and frequency domain basis vector selection information calculated based on each channel measurement reference signal resource in the second group is reported separately.

34. The apparatus of claim 33, wherein a target grouping result of the frequency domain basis vector is indicated in a bitmap way.

35. A processor-readable storage medium, wherein the processor-readable storage medium stores a computer program, and the computer program is used to cause a processor to perform the method of any one of claims 1 to 9, or the method of any one of claims 10 to 16.

Determining one or more target codebook parameters based on channel measurement information corresponding to multiple channel measurement reference signal resources and/or grouping information of multiple channel measurement reference signal resources ⟋‾100

Reporting multiple pieces of codebook parameter information based on the target codebook parameter ⟋‾101

FIG. 1

Receiving multiple pieces of codebook parameter information reported from a terminal ⟋ 200

Determining a reporting way of the codebook parameter information, and decoding the codebook parameter information based on overhead or a bit width corresponding to the reporting way of the codebook parameter information, to obtain channel state information ⟋ 201

FIG. 2

⟋‾300

| Processor | | Bus interface | | Transceiver ⟋‾310 |

⟋‾320

| Memory |

| User interface | ⟋‾330

FIG. 3

**EP 4 597 864 A1**

FIG. 4

FIG. 5

FIG. 6

28

## INTERNATIONAL SEARCH REPORT

| International application No. |
|---|
| **PCT/CN2023/117247** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC:H04B,H04W

Documentation searched other than minimum documentation to the extent that such documents are included in the fields searched

Electronic data base consulted during the international search (name of data base and, where practicable, search terms used)

3GPP, CNTXT, DWPI, ENTXTC, VEN, WPABSC: 码本, 参数, 上报, 信道测量, 参考信号, 频域, 时域, 空域, channel, codebook, measurement, parameter, config, frequency, time, domain, CJT, CSI, RS, RRC, MAC

### C. DOCUMENTS CONSIDERED TO BE RELEVANT

| Category* | Citation of document, with indication, where appropriate, of the relevant passages | Relevant to claim No. |
|---|---|---|
| X | CN 106953672 A (ZTE CORP.) 14 July 2017 (2017-07-14) description, paragraphs 60-188 | 1-2, 9-10, 17-20, 27-28, 35 |
| A | CN 111769857 A (HUAWEI TECHNOLOGIES CO., LTD.) 13 October 2020 (2020-10-13) entire document | 1-35 |
| A | CN 113708812 A (HUAWEI TECHNOLOGIES CO., LTD.) 26 November 2021 (2021-11-26) entire document | 1-35 |
| A | WO 2020142974 A1 (QUALCOMM INC.) 16 July 2020 (2020-07-16) entire document | 1-35 |
| A | NOKIA et al. "3GPP TSG-RAN WG1 Meeting #101-e R1-2005160" *Corrections on NR enhanced MIMO*, 24 June 2020 (2020-06-24), entire document | 1-35 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

International application No.

**PCT/CN2023/117247**

| Patent document cited in search report | | | Publication date (day/month/year) | Patent family member(s) | | | Publication date (day/month/year) |
|---|---|---|---|---|---|---|---|
| CN | 106953672 | A | 14 July 2017 | US | 2019020396 | A1 | 17 January 2019 |
| | | | | EP | 3402089 | A1 | 14 November 2018 |
| | | | | WO | 2017118443 | A1 | 13 July 2017 |
| CN | 111769857 | A | 13 October 2020 | WO | 2020200059 | A1 | 08 October 2020 |
| | | | | KR | 20210142724 | A | 25 November 2021 |
| | | | | EP | 3937391 | A1 | 12 January 2022 |
| | | | | US | 2022022193 | A1 | 20 January 2022 |
| | | | | VN | 83664 | A | 25 January 2022 |
| | | | | IN | 202137049736 | A | 11 March 2022 |
| | | | | JP | 2022528402 | W | 10 June 2022 |
| | | | | CN | 114928386 | A | 19 August 2022 |
| CN | 113708812 | A | 26 November 2021 | WO | 2018202071 | A1 | 08 November 2018 |
| | | | | CN | 108809374 | A | 13 November 2018 |
| | | | | IN | 201947046457 | A | 22 November 2019 |
| | | | | EP | 3614590 | A1 | 26 February 2020 |
| | | | | US | 2020067588 | A1 | 27 February 2020 |
| WO | 2020142974 | A1 | 16 July 2020 | US | 2022039107 | A1 | 03 February 2022 |
| | | | | WO | 2020143699 | A1 | 16 July 2020 |
| | | | | TW | 202032936 | A | 01 September 2020 |
| | | | | KR | 20210112313 | A | 14 September 2021 |
| | | | | SG | 11202105993 | XA | 29 July 2021 |
| | | | | EP | 3909148 | A1 | 17 November 2021 |
| | | | | CN | 113273100 | A | 17 August 2021 |

Form PCT/ISA/210 (patent family annex) (July 2022)

**REFERENCES CITED IN THE DESCRIPTION**

**Patent documents cited in the description**

- CN 202211217115